# EUROPÄISCHE PATENTSCHRIFT

(11) **EP 2 594 782 B1**
(45) Veröffentlichungstag und Bekanntmachung des Hinweises auf die Patenterteilung: **01.02.2017**
(21) Anmeldenummer: 12192854.3
(22) Anmeldetag: 15.11.2012
(51) Int. Cl.: F03D 9/10, F03B 17/02, F03D 9/13, F03G 3/00

(54) **Energiespeicherung am Meeresboden**
Energy storage on the sea floor
Stockage d'énergie au fond de la mer

(30) Priorität: 18.11.2011 DE 102011055524
(43) Veröffentlichungstag der Anmeldung: 22.05.2013
(73) Patentinhaber: ThyssenKrupp Transrapid GmbH, 34127 Kassel (DE)
(72) Erfinder: Zheng, Qinhua, Dr., 80331 München (DE)
(74) Vertreter: Lorenz, Bernd Ingo Thaddeus

(56) Entgegenhaltungen:
- WO-A1-2010/051630
- DE-A1- 10 333 513
- DE-A1-102006 059 233
- US-A1- 2010 283 244

## Beschreibung

Die Erfindung betrifft eine Energiespeicheranlage für den Einsatz in einem Gewässer mit einer Vielzahl von Auftriebskörpern und mit einer Hubeinrichtung zum Absenken und Anheben der Auftriebskörper. Gegenstand der Erfindung ist auch ein Verfahren zur Speicherung von Energie.

Bei der Energieversorgung mit Elektrizität besteht in der Praxis das Problem, dass sowohl hinsichtlich der Energieerzeugung als auch hinsichtlich des Energiebedarfes erhebliche Schwankungen auftreten. Bei dem Energiebedarf sind Kundengewohnheiten zu berücksichtigen, wobei sich der Energiebedarf über den Tag verteilt deutlich ändert. Über eine typische Grundlast hinausgehend ergibt sich eine sich über den Tagesverlauf ändernde Mittellast sowie kurzfristige Spitzenlasten.

Bei Kohle- und Kernkraftwerken ist eine kurzfristige Anpassung nicht möglich, so dass insbesondere Spitzenlasten mit sehr schnell regelbaren Kraftwerken wie Gaskraftwerken ausgeglichen werden müssen. Darüber hinaus sind auch Pumpspeicherkraftwerke bekannt, welche eine Umwandlung von elektrischer Energie in potentielle Energie ermöglichen.

Neben der von dem Tagesverlauf, dem Wochentag sowie dem Wetter abhängigen Nachfrage ergibt sich durch die erhebliche Zunahme alternativer, flüchtiger Energieträger wie Wind- und Sonnenkraft auch das Problem, dass bei der Energieerzeugung erhebliche, zum Teil nicht genau vorhersehbare Schwankungen auftreten können. Aus ökonomischen und ökologischen Gründen ist eine vollständige Ausnutzung der durch alternative Energieträger anfallenden Energie anzustreben. Mit einem zunehmenden Anteil alternativer Energien und der damit verbundenen Schwankungen steigt auch der Bedarf an einer Zwischenspeicherung. Dabei ist zu berücksichtigen, dass bei einem Überangebot an elektrischer Energie der Strom nur zu geringeren Preisen vermarktet werden kann, wobei auch das Elektrizitätsnetz für einen Transport der elektrischen Energie über weite Strecken ausgelegt sein muss.

So können beispielsweise große Windparks bei starkem Wind eine sehr große Menge an elektrischer Energie erzeugen, die dann als Überangebot vorliegt. Durch geeignete Maßnahmen zur Umwandlung und Speicherung elektrischer Energie können also hinsichtlich der erzielten Verkaufspreise des elektrischen Stroms als auch bezüglich einer optimalen Auslegung des Stromnetzes erhebliche wirtschaftliche Vorteile erreicht werden.

Hinsichtlich der bekannten Pumpspeicherkraftwerke ergibt sich der Nachteil, dass diese spezielle geografische Randbedingungen erfordern. So muss einerseits ein Wasserreservoir vorhanden sein, wobei dann ein höher gelegener Stausee errichtet wird. Unter Einsatz von elektrischer Energie wird Wasser aus dem Wasserreservoir in den Stausee gepumpt und somit entsprechend der Höhendifferenz in potentielle Energie umgewandelt. Bei einem Mangel an elektrischem Strom wird das Wasser über eine Turbine unter Rückgewinnung elektrischer Energie wieder dem Wasserreservoir zugeführt. Durch Verdunstung in dem Stausee und Reibung ist die Effizienz begrenzt. Darüber hinaus sind Pumpspeicherkraftwerke auch aus ökologischer Sicht nicht ohne Nachteil, weil die Errichtung eines Stausees mit erheblichen Baumaßnahmen verbunden ist und der Stausee selbst ein sich ständig änderndes Wasserniveau aufweist.

Auch andere Speicherverfahren wie Druckluftspeicher, eine Umwandlung elektrischer Energie in chemische Energie, beispielsweise durch Erzeugung von Wasserstoff, die Speicherung mittels Schwungmassen oder eine direkte elektrische Speicherung in Kondensatoren, supraleitenden Spulen oder Akkumulatoren hat sich in der Praxis aufgrund der begrenzten Speicherkapazität, der geringen Effizienz sowie des erheblichen Investitionsaufwands nicht flächendeckend durchgesetzt.

Eine Energiespeicheranlage mit den eingangs beschriebnen Merkmalen ist aus der DE 10 2006 059 233 A1 bekannt. Dabei wird ein Auftriebskörper oder eine Vielzahl von miteinander fest verbundenen Auftriebskörpern unter Einsatz elektrischer Energie in einem Gewässer mittels einer Hubeinrichtung abgesenkt, wodurch elektrische Energie bei einem Überangebot in potentielle Energie umgewandelt wird. Durch das Festhalten der miteinander verbundenen Auftriebskörper auf einem tief liegenden Niveau kann die potentielle Energie verlustfrei auch über einen langen Zeitraum gespeichert werden. Elektrische Energie wird dadurch zurückgewonnen, dass bei dem Aufsteigen der miteinander verbundenen Auftriebskörper ein Generator angetrieben wird. Es ergibt sich auch der Vorteil, dass die Ein- und Ausspeisung elektrischer Energie kurzfristig erfolgen kann. Allerdings ergibt sich die Einschränkung, dass die zu speichernde Energiemenge begrenzt ist. Eine Skalierung der Energiespeicheranlage zur Aufnahme einer größeren Energiemenge ist nicht ohne Weiteres möglich, weil dann eine sehr stabile Konstruktion zur Aufnahme der miteinander verbundenen Auftriebskörper nötig ist. Zusätzlich steigen mit zunehmender Größe der Energiespeicheranlage auch die Betriebsrisiken im Fall einer Störung oder Fehlfunktion.

Eine nach einem ähnlichen Prinzip arbeitende Energiespeicheranlage ist aus der WO 2010/051630 A1 bekannt. Ein Auftriebskörper oder mehrere Auftriebskörper können über jeweils ein Seil und zumindest eine Umlenkrolle am Boden eines Gewässers an eine elektrische Maschine angeschlossen sein, welche als Motor oder Generator arbeitet. Auch dabei steigt der konstruktive Aufwand erheblich an, wenn die Speicherkapazität erhöht werden soll.

Aus DE 103 33 513 A1 ist ein Antrieb für eine Arbeitsmaschine im Unterwassereinsatz bekannt, wobei die gesamte Vorrichtung einschließlich eines Auftriebskörpers aufgrund ihres Eigengewichtes absinkt. Um mit der abgesenkten Vorrichtung Energie zu gewinnen, kann der Auftriebskörper aufsteigen, wobei üblicherweise direkt eine Umwandlung der potentiellen Energie in Bewegungsenergie erfolgt. Für eine erneute Verwendung muss die gesamte Anlage unter Energieaufwand gehoben werden.

Der vorliegenden Erfindung liegt die Aufgabe zugrunde, eine Energiespeicheranlage für den Einsatz in einem Gewässer anzugeben, welche eine verbesserte Skalierbarkeit und geringe Investitionskosten aufweist. Des Weiteren soll ein entsprechendes Verfahren zur Speicherung von Energie angegeben werden.

Ausgehend von einer Energiespeicheranlage mit den eingangs beschriebenen Merkmalen wird die Aufgabe erfindungsgemäß dadurch gelöst, dass die Auftriebskörper an der Hubeinrichtung einzeln oder in Gruppen an- und abkoppelbar sind, wobei zumindest ein Reservoir zur Aufnahme der abgekoppelten Auftriebskörper vorgesehen ist. Im Rahmen der Erfindung wird die Aufnahmekapazität der Anlage durch die Anzahl der Auftriebskörper bestimmt, die je nach Bedarf an die Hubeinrichtung an- und abgekoppelt werden können. An der Hubeinrichtung selbst ist damit nur ein Teil der Auftriebskörper angeschlossen.

Die Erfindung bezieht sich insbesondere auf eine Ausgestaltung, bei der an einem oberen Ende der Hubeinrichtung ein oberes Reservoir und an einem unteren Ende der Hubeinrichtung ein unteres Reservoir zur Aufnahme abgekoppelter Auftriebskörper angeordnet ist. Die gesamte Speicherkapazität wird damit durch die Größe der Reservoirs bzw. der Anzahl der Auftriebskörper bestimmt. Es ergibt sich der Vorteil, dass die Reservoirs in einem weiten Bereich skaliert werden können, so dass bezogen auf die elektrische Leistung der Anlage erhebliche Speicherkapazitäten bereitgestellt werden können.

Die in dem unteren Reservoir gehaltenen Auftriebskörper speichern jeweils eine spezifische potentielle Energie, wobei im Gegensatz zum Stand der Technik nicht die gesamte Summe der Auftriebskräfte an der Hubeinrichtung wirkt.

Bei dem Gewässer handelt es sich vorzugsweise um ein Meer oder einen See, um eine geeignete Hubhöhe bereitstellen zu können. Bezogen auf das Gesamtvolumen eines solchen Gewässers ist die Verdrängung durch die abgesenkten Auftriebskörper in der Regel vernachlässigbar. Die Energiespeicheranlage ist deshalb auch aus ökologischer Sicht weitgehend unbedenklich.

Bei dem Reservoir muss es sich nicht um einen geschlossenen oder klar abgegrenzten Raum handeln. Die Auftriebskörper müssen lediglich für eine Ankopplung an die Hubeinrichtung bereitgehalten werden. Bei dem oberen Reservoir können die Auftriebskörper frei schwimmen und müssen üblicherweise nur gegen ein Wegschwimmen gesichert werden, wenn sich das obere Reservoir an der Wasseroberfläche befindet. So ist es dort beispielsweise möglich, die einzelnen ausgekoppelten Auftriebskörper unabhängig voneinander mit jeweils einem Seil zu sichern, wobei auch eine solche Anordnung im Rahmen der Erfindung als Reservoir bezeichnet wird. Darüber hinaus sind weitere Varianten möglich, bei denen die ausgekoppelten Auftriebskörper beispielsweise gemeinsam auf einem Seil oder einer Schiene aufgereiht oder in einem umrandeten Bereich angeordnet werden. Unter Wasser, also insbesondere in dem unteren Reservoir, müssen die Auftriebskörper gegen ein Aufschwimmen gesichert werden. Beispielsweise kann das untere Reservoir in Form eines Seils, einer Schiene oder dergleichen am Boden des Gewässers verankert und/oder mit Gewichten beschwert sein.

Um im Rahmen der Erfindung einen kontinuierlichen Betrieb zu ermöglichen, ist zweckmäßigerweise eine Hubeinrichtung mit einem umlaufenden Zugmittel in Form eines Seiles, einer Kette oder eines Bandes vorgesehen.

Gemäß einer bevorzugten Weiterbildung dieser Hubeinrichtung kann das Zugmittel eine mittlere Dichte aufweisen, die in etwa der Dichte von Wasser entspricht. Im Rahmen einer solchen Ausgestaltung kann erreicht werden, dass die Gewichtskraft des Zugmittels sowie die Auftriebskraft des Zugmittels sich weitgehend oder vollständig aufheben. Das Eigengewicht des Zugmittels ist deshalb nicht zu berücksichtigen. Wenn dagegen ein Zugmittel eingesetzt wird, welches deutlich leichter oder schwerer ist als Wasser, werden gerade bei einem langen Zugmittel alleine durch das Eigengewicht bzw. durch das Aufschwimmen des Zugmittels erheblich Kräfte erzeugt, die eine entsprechend stabile Ausgestaltung des Zugmittels erfordern.

Vorzugsweise beträgt die Dichte des Zugmittels zwischen 900 kg/m³ und 1100 kg/m³. Beispielsweise können Kunststoffmaterialien eingesetzt werden, die eine ähnliche Dichte wie Wasser aufweisen. Darüber hinaus sind aber auch andere Materialien und Materialkombinationen denkbar. Wenn beispielsweise ein Seil oder eine Kette eingesetzt wird, die im Wesentlichen aus einem Metall besteht, welches schwerer ist als Wasser, können in einer gleichmäßigen Verteilung entlang des Zugmittels auch Schwimmkörper oder andere Materialien mit einer geringeren Dichte vorgesehen werden, um im Mittel eine Dichte zu erreichen, die in etwa der Dichte von Wasser entspricht.

Ein umlaufendes Zugmittel in Form eines Seiles, einer Kette oder eines Bandes wird zweckmäßigerweise um Umlenkrollen geführt, wobei an dem oberen Ende der Hubeinrichtung, üblicherweise also nahe der Wasseroberfläche, eine obere Umlenkrolle und an dem unteren Ende der Hubeinrichtung, beispielsweise im Bereich eines Bodens des Gewässers, eine untere Umlenkrolle angeordnet ist.

Wie bereits beschrieben, ergibt sich im Rahmen der Erfindung der Vorteil, dass bei dem Betrieb der Energiespeicheranlage nur ein Bruchteil der insgesamt vorgesehenen Auftriebskörper an der Hubeinrichtung angeschlossen ist. Die Hubeinrichtung muss also nicht die gesamte Auftriebskraft sämtlicher Auftriebskörper aufnehmen und kann entsprechend weniger stabil ausgelegt sein. Die Auslegung der Hubeinrichtung hängt im Wesentlichen von der gewünschten elektrischen Leistung der Energiespeicheranlage ab. Erfindungsgemäß können die maximale elektrische Leistung einerseits und die Speicherkapazität andererseits bei der Auslegung bedarfsgerecht unabhängig voneinander variiert werden.

Zum Absenken der Auftriebskörper bzw. zur Rückgewinnung der elektrischen Energie bei einem Aufsteigen der Auftriebskörper weist die Hubeinrichtung vorzugsweise eine elektrische Maschine auf, die wahlweise als Motor oder Generator zu betreiben ist. Alternativ ist es auch möglich, zur Einspeisung der Energie sowie zur Zurückgewinnung einen Motor sowie einen Generator einzusetzen, die voneinander getrennt sind. Zweckmäßigerweise ist die elektrische Maschine über einen Wechselrichter an ein externes Stromnetz angeschlossen.

Die erfindungsgemäße Energiespeicheranlage kann auf besonders vorteilhafte Weise mit Offshore-Windparks kombiniert werden, die auf der offenen See installiert sind. Wie bereits aus dem Stand der Technik bekannt, kann im Rahmen einer solchen Ausgestaltung die für die Windkraftanlagen bereitgehaltene Infrastruktur mitgenutzt werden. So kann die Energiespeicheranlage beispielsweise auch an dem Mast einer Windkraftanlage befestigt sein.

Insgesamt ergeben sich jedoch hinsichtlich der Fixierung der Anlage nur vergleichsweise geringe Anforderungen, weil nur ein Teil der Auftriebskörper bei dem Betrieb an die Hubeinrichtung angeschlossen ist. Die abgesenkten, eine potentielle Energie speichernden Auftriebskörper müssen lediglich gegen ihre Auftriebskraft festgehalten werden. Die am oberen Ende der Hubeinrichtung angeordneten, abgekoppelten Auftriebskörper müssen lediglich gegen ein Wegschwimmen gesichert und für eine Ankopplung an die Hubeinrichtung bereit gehalten werden. Eine darüber hinausgehende Fixierung ist nicht notwendig. Die beschriebene einfache Konstruktion erlaubt gegebenenfalls auch noch nachträglich eine Erhöhung der Speicherkapazität, indem das Aufnahmevolumen der Reservoirs erhöht und weitere Auftriebskörper hinzugefügt werden.

Da im Gegensatz zum Stand der Technik nicht ein einziges Modul von Schwimmkörpern, sondern eine Vielzahl von einander getrennten Schwimmkörpern eingesetzt wird, ist auch in einem Schadensfall die Gefahr von Folgeschäden reduziert. Wenn beispielsweise das Zugmittel in Form eines Seils, einer Kette oder eines Bandes bricht, steigen lediglich die daran angeschlossenen Auftriebskörper in einem Abstand zueinander auf und erreichen auch zu unterschiedlichen Zeiten die Wasseroberfläche. Dabei ist zu berücksichtigen, dass bei einem Brechen des Zugmittels sich eine erhöhte Aufstiegsgeschwindigkeit einstellt, bei der auch die Energiedissipation durch Reibung überproportional ansteigt. Ein Großteil der freigesetzten Energie wird so in Form von Wärme an das umliegende Wasser abgeleitet. Bei einem Brechen des Zugmittels sind die nicht an die Hubeinrichtung angekoppelten, auf einem niedrigen Niveau festgehaltenen Auftriebskörper üblicherweise nicht betroffen, so dass auch die darin gespeicherte Energie nicht freigesetzt wird.

Die elektrische Maschine, die vorzugsweise als Motor oder als Generator zu betreiben ist, kann ohne Einschränkung am oberen Ende oder am unteren Ende der Hubeinrichtung angeordnet sein. Wenn an dem oberen Ende der Hubeinrichtung eine schwimmende Plattform oder dergleichen angeordnet ist, wird die elektrische Maschine vorzugsweise am unteren Ende der Hubeinrichtung angebracht, weil dann die Plattform am oberen Ende der Hubeinrichtung im Wesentlichen frei von Zugkräften ist. Schließlich trägt im Rahmen einer solchen Ausgestaltung auch das Eigengewicht der elektrischen Maschine dazu bei, der Auftriebskraft der Auftriebskörper entgegenzuwirken.

Im Rahmen der Erfindung ist es möglich, dass sich die Auftriebskörper bei einem Betrieb der Energiespeicheranlage allein durch die Bewegung der Hubeinrichtung automatisch an- und abkoppeln. Eine Variation der elektrischen Leistung ist dann über die Änderung der Geschwindigkeit der Hubeinrichtung möglich. Dabei ist aber zu berücksichtigen, dass mit zunehmender Geschwindigkeit der Auftriebskörper bei dem Absenken bzw. dem Aufsteigen auch die Reibungsverluste zunehmen, weshalb vorzugsweise eine Geschwindigkeit eingestellt wird, die deutlich unter der Geschwindigkeit liegt, mit der die Auftriebskörper frei bei einem Gleichgewicht der Reibungskräfte und der Auftriebskräfte aufsteigen würden.

Um bei einer niedrigen, insbesondere im Wesentlichen konstanten Geschwindigkeit bei dem Absenken und Aufsteigen die Leistung anpassen zu können, kann eine Steuereinrichtung zum Steuern des Ankoppelns der Auftriebskörper vorgesehen sein. Wenn also eine erhöhte Leistung bereitgestellt werden soll, werden bei dem Speichern der Energie oder bei dem Zurückgewinnen der Energie an dem oberen Reservoir bzw. an dem unteren Reservoir mehr Auftriebskörper nacheinander angekoppelt. Entsprechend ist dann auch der Abstand der aufeinander in vertikaler Richtung folgenden Auftriebskörper geringer.

Die erfindungsgemäße Energiespeicheranlage kann bereits bei geringen Wassertiefen eingesetzt werden. Da aber im Rahmen der Erfindung keine durchgehende starre, tragende Konstruktion entlang der gesamten Hubeinrichtung notwendig ist, ist auch ein Einsatz bei sehr großen Höhenunterschieden von beispielsweise bis zu 2000 m oder mehr möglich. Ein besonders effizienter Betrieb der Energiespeicheranlage ist bei einem von der Hubeinrichtung überbrückten Höhenunterschied zwischen 100 m und 1500 m möglich.

Um durch das Absenken der Auftriebskörper potentielle Energie speichern zu können, müssen die Auftriebskörper eine Dichte unterhalb der Dichte von Wasser aufweisen. Um einen effizienten Betrieb zu ermöglichen, weisen die Auftriebskörper vorzugsweise eine Dichte von weniger als 400 kg/m³ auf. Abhängig von der Tiefe muss ein Material für die Auftriebskörper ausgewählt werden, welches dem mit der Tiefe zunehmendem Wasserdruck standhalten kann. Auch die Größe der einzelnen Auftriebskörper ist bedarfsgerecht auszuwählen.

Die gesamte Energiespeicheranlage soll üblicherweise in ihrer Position in dem Gewässer festgelegt sein. Wenn sich die Hubeinrichtung bis zu dem Boden erstreckt, kann die Energiespeicheranlage mit einer bodenseitigen Befestigungseinrichtung, beispielsweise einer an dem Boden angeschlossenen Umlenkrolle fixiert werden. Darüber hinaus ist es auch möglich, eine räumliche Fixierung durch einen Anker oder dergleichen zu erreichen. Auch das untere Reservoir, welches beispielsweise die Form eines Seiles, einer Schiene oder dergleichen haben kann, ist an dem Boden zu verankern oder mit Gewichten zu beschweren.

Um einen besonders wirtschaftlichen Betrieb der Energiespeicheranlage zu ermöglichen, beträgt die Speicherkapazität vorzugsweise mehr als 10 MJ (Megajoule), vorzugsweise mehr als 100 MJ. Wie bereits ausführlich erläutert, ist jedoch im Rahmen der Erfindung auf besonders einfache Weise eine sehr weitreichende Skalierung und damit eine Erhöhung der Speicherkapazität möglich.

Gegenstand der Erfindung ist auch ein Verfahren zur Speicherung von Energie, insbesondere mit der zuvor beschriebenen Vorrichtung, wobei zur Umwandlung überschüssiger elektrischer Energie in potentielle Energie Auftriebskörper gegen ihre Auftriebskraft mit einer Hubeinrichtung abgesenkt werden, wobei in anderen zeitlichen Intervallen durch das Aufschwimmen der Auftriebskörper elektrische Energie zurückgewonnen wird, wobei während der Rückgewinnung elektrischer Energie aufgeschwommene Auftriebskörper von der Hubeinrichtung abgekoppelt und für eine erneute Ankopplung an die Hubeinrichtung und eine erneute Absenkung zur Umwandlung überschüssiger elektrischer Energie in potentielle Energie bereitgehalten werden. Vorzugsweise werden die Auftriebskörper während der Umwandlung überschüssiger elektrischer Energie in potentielle Energie auch bei einem Erreichen des unteren Endes der Hubeinrichtung ausgekoppelt und dort gegen ihre Auftriebskraft in einem unteren Reservoir festgehalten.

Gemäß einer bevorzugten Weiterbildung der Erfindung werden die Absenk- und Auftriebsgeschwindigkeit unterhalb einer vorgegebenen Maximalgeschwindigkeit und vorzugsweise in etwa konstant gehalten, wobei die Leistung bei der Umwandlung der elektrischen Energie in potentielle Energie und bei der Rückgewinnung elektrischer Energie durch die Anzahl der an die Hubeinrichtung angekoppelten Auftriebskörper verändert wird.

Die Erfindung wird im Folgenden anhand einer lediglich ein Ausführungsbeispiel darstellenden Zeichnung erläutert. Es zeigen:
- Fig. 1: eine erfindungsgemäße Energiespeicheranlage,
- Fig. 2 und Fig. 3: Varianten der Energiespeicheranlage gemäß der Fig. 1.

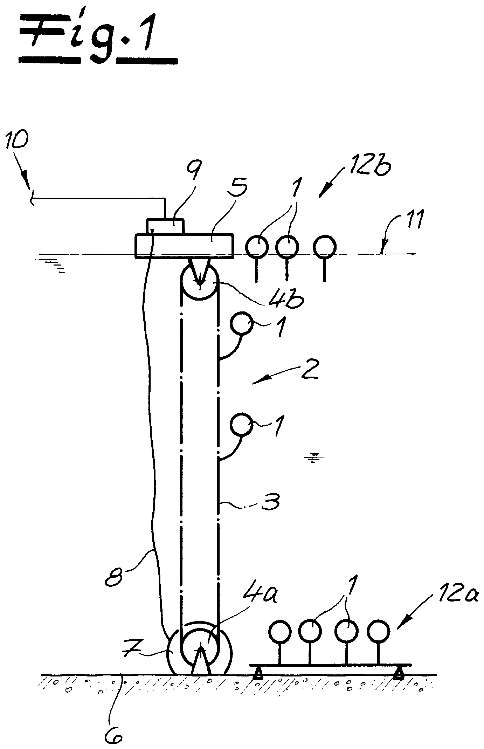

Die Fig. 1 zeigt eine Energiespeicheranlage für den Einsatz in einem Gewässer, insbesondere für den Einsatz im offenen Meer. Die Energiespeicheranlage weist eine Vielzahl von Auftriebskörpern 1 und eine Hubeinrichtung 2 auf, wobei die Auftriebskörper 1 an die Hubeinrichtung 2 an- und abkoppelbar sind und wobei nur ein Teil der Auftriebskörper 1 an die Hubeinrichtung 2 angeschlossen ist.

In dem dargestellten Ausführungsbeispiel weist die Hubeinrichtung 2 ein umlaufendes Zugmittel 3 in Form eines Seiles, einer Kette oder eines Bandes auf, wobei das Zugmittel 3 um eine untere, bodenseitige Umlenkrolle 4a und eine obere Umlenkrolle 4b geführt ist und wobei die obere Umlenkrolle 4b von einer schwimmenden Plattform 5 gehalten ist. Die gesamte Hubeinrichtung 2 ist an der unteren Umlenkrolle 4a an einem Meeresboden 6 verankert, wobei in dem dargestellten Ausführungsbeispiel auch eine elektrische Maschine 7 an dem unteren Ende der Hubeinrichtung 2 angeordnet ist.

Die elektrische Maschine 7 kann als Motor betrieben werden, um die an das Zugmittel 3 angekoppelten Auftriebskörper 1 gegen ihre Auftriebskraft nach unten zu ziehen. Dabei wird die von der elektrischen Maschine 7 eingesetzte elektrische Energie in potentielle Energie der abgesenkten Auftriebskörper 1 umgewandelt.

Eine Zurückgewinnung der potentiellen Energie erfolgt dagegen dadurch, dass bei einer entgegengesetzten Bewegungsrichtung des Zugmittels 3 die aufsteigenden Auftriebskörper 1 die elektrische Maschine 7 antreiben, die dann als Generator betrieben wird. Die elektrische Maschine 7 ist über Strom- und Signalkabel 8 an die schwimmende Plattform 5 angeschlossen.

Eine elektrische Schaltung 9 in Form einer Steuerung und eines Wechselrichters ist zwischen einem Anschluss 10 für ein externes Stromnetz und der elektrischen Maschine 7 angeordnet. Aus praktischen Gründen kann die elektronische Schaltung 9 auf der schwimmenden Plattform 5 vorgesehen sein, so dass die Schaltung 9 gegebenenfalls leicht gewartet werden kann.

Erfindungsgemäß ist nur ein Teil der Auftriebskörper 1 im ausgekoppelten Zustand an der Wasseroberfläche 11 und/oder an dem Meeresboden 6 angeordnet. Wenn die Energiespeicheranlage vollständig entladen ist, sind sämtliche ausgekoppelte Auftriebskörper 1 an der Wasseroberfläche 11. Bei einer vollständigen Ladung befinden sich sämtliche ausgekoppelten Auftriebskörper 1 im Bereich des Meeresbodens 6. Dabei liegt es im Ermessen des Fachmannes, auch sämtliche Auftriebskörper 1 von der Hubeinrichtung 2 auszukoppeln, um eine vollständige Ladung bzw. Entladung der Energiespeicheranlage zu realisieren.

Die Fig. 1 zeigt einen typischen Zustand, bei dem die Energiespeicheranlage nur zu einem Teil geladen ist. Erfindungsgemäß speichern die ausgekoppelten, am Meeresboden 6 angeordneten Auftriebskörper potentielle Energie, wobei eine verlustfreie Speicherung auch über einen langen Zeitraum möglich ist. Die abgesenkten Auftriebskörper 1 bilden dabei ein unteres Reservoir 12a, welches damit einen Energiespeicher darstellt. Die Speicherkapazität kann durch die Größe des unteren Reservoirs 12a, das heißt, durch die Aufnahmekapazität des unteren Reservoirs 12a für Auftriebskörper 1 angepasst werden. Das untere Reservoir 12a kann beispielsweise durch eine Schiene, ein Seil oder dergleichen gebildet werden, an der die von der Hubeinrichtung 2 ausgekoppelten Auftriebskörper 1 festgehalten werden.

Erfindungsgemäß ist damit ein Großteil der gespeicherten Energie in einem passiven Zustand, so dass die Hubeinrichtung 2 nur die Auftriebskräfte einer begrenzten Anzahl von Auftriebskörpern 1 aufnehmen muss.

Gemäß der Fig. 1 schwimmen weitere Auftriebskörper 1 an der Wasseroberfläche. Diese frei schwimmenden Auftriebskörper 1 bilden ein oberes Reservoir 12b. Die Auftriebskörper 1 in dem oberen Reservoir 12b sind lediglich gegen ein Wegschwimmen zu sichern, wozu diese beispielsweise jeweils mit einem nicht dargestellten Seil an der Plattform befestigt oder gemeinsam entlang eines Seiles oder einer Schiene angeordnet sind.

Die dargestellte Energiespeicheranlage ist auch bei großen Tiefen von 2000 m oder mehr einsetzbar. Insbesondere bei derart großen Tiefen ist es von Vorteil, wenn das Zugmittel 3 eine Dichte aufweist, die zwischen 900 kg/m³ und 1100 kg/m³ beträgt. Das Eigengewicht des Zugmittels wird dann nämlich weitgehend oder vollständig von der Auftriebskraft des Zugmittels kompensiert und zieht weder an der schwimmenden Plattform 5 noch an der unteren Umlenkrolle 4b.

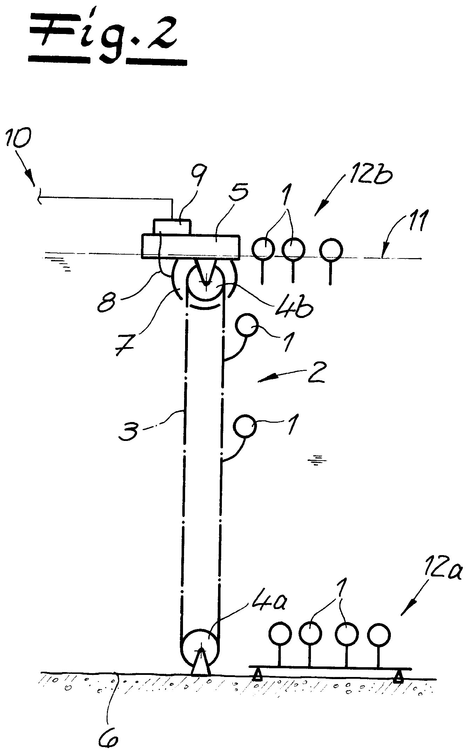

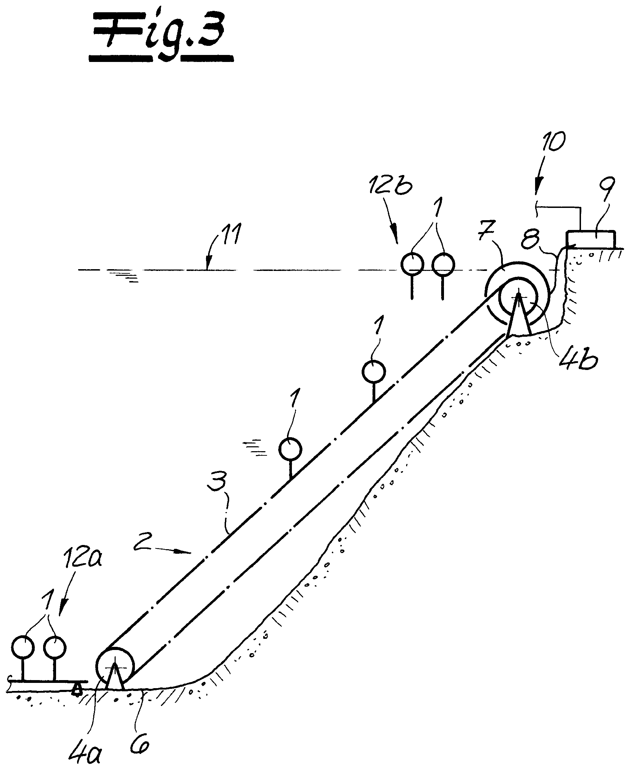

Die Fig. 2 und 3 zeigen ausgehend von dem beschriebenen Grundprinzip der Energiespeicheranlage Abwandlungen, wobei gemäß der Fig. 2 die elektrische Maschine 7 an der schwimmenden Plattform 5 angeordnet ist. Als Vorteil ergibt sich, dass die elektrische Maschine im Falle einer Wartung unmittelbar zugänglich ist. Allerdings muss die schwimmende Plattform das Gewicht der elektrischen Maschine aufnehmen, wobei auch die Zugkräfte nicht vollständig von der schwimmenden Plattform 5 ferngehalten werden können.

Bei der Ausgestaltung gemäß der Fig. 3 verläuft die Hubeinrichtung schräg, um die obere Umlenkrolle 4b am Rand des Gewässers und die untere Umlenkrolle 4a in einem tieferen Bereich an dem Meeresboden 6 oder allgemein an dem Boden des Gewässers anordnen zu können. Bei der Ausgestaltung gemäß der Fig. 3 kann auch das obere Ende der Hubeinrichtung direkt an dem Boden abgestützt werden, wobei die Abstützung unterhalb der Wasseroberfläche 11 oder aber auch vollständig an Land erfolgen kann. Die Variante gemäß der Fig. 3 ist insbesondere dann zweckmäßig, wenn die Energiespeicheranlage nicht mit sonstigen meerestechnischen Anlagen auf offener See, wie einem Offshore-Windpark, kombiniert werden soll und/oder wenn küstennah eine ausreichende Wassertiefe vorhanden ist.

In Abwandlung der Fig. 1 und 2 kann die Hubeinrichtung 2 auch an einer ohnehin vorgesehenen meerestechnischen Einrichtung, beispielsweise dem Mast einer Windkraftanlage, angeordnet werden.

## Patentansprüche

1. Energiespeicheranlage für den Einsatz in einem Gewässer mit einer Vielzahl von Auftriebskörpern (1) und mit einer Hubeinrichtung (2) zum Absenken und Anheben der Auftriebskörper (1), **dadurch gekennzeichnet, dass** die Auftriebskörper (1) an die Hubeinrichtung (2) an- und abkoppelbar sind, wobei zumindest ein Reservoir (12a, 12b) zur Aufnahme abgekoppelter Auftriebskörper vorgesehen ist.

2. Energiespeicheranlage nach Anspruch 1, **dadurch gekennzeichnet, dass** an einem oberen Ende der Hubeinrichtung (2) ein oberes Reservoir (12b) und an einem unteren Ende der Hubeinrichtung (2) ein unteres Reservoir (12a) zur Aufnahme abgekoppelter Auftriebskörper (1) angeordnet ist.

3. Energiespeicheranlage nach Anspruch 1 oder 2, **dadurch gekennzeichnet, dass** die Hubeinrichtung (2) ein umlaufendes Zugmittel (3) in Form eines Seiles, einer Kette oder eines Bandes aufweist.

4. Energiespeicheranlage nach einem der Ansprüche 1 bis 3, **dadurch gekennzeichnet, dass** das Zugmittel (3) eine Dichte zwischen 900 kg/m³ und 1.100 kg/m³ aufweist.

5. Energiespeicheranlage nach einem der Ansprüche 1 bis 4, **dadurch gekennzeichnet, dass** die Hubeinrichtung (2) eine elektrische Maschine (7) aufweist, die wahlweise als Motor oder als Generator zu betreiben ist.

6. Energiespeicheranlage nach Anspruch 5, **dadurch gekennzeichnet, dass** die elektrische Maschine (7) an einem unteren Ende der Hubeinrichtung (2) angeordnet ist.

7. Energiespeicheranlage nach einem der Ansprüche 1 bis 6, **gekennzeichnet durch** eine Steuereinrichtung zur Steuerung des Ankoppelns der Auftriebskörper (1).

8. Energiespeicheranlage nach einem der Ansprüche 1 bis 7, **dadurch gekennzeichnet, dass** der von der Hubeinrichtung (2) überbrückte Höhenunterschied zwischen 20 m und 2000 m, vorzugsweise zwischen 100 m und 1500 m beträgt.

9. Energiespeicheranlage nach einem der Ansprüche 1 bis 8, **dadurch gekennzeichnet, dass** die Auftriebskörper (1) eine Dichte von weniger als 400 kg/m³ aufweisen.

10. Energiespeicheranlage nach einem der Ansprüche 1 bis 9, **gekennzeichnet durch** eine bodenseitige Befestigungseinrichtung.

11. Energiespeicheranlage nach einem der Ansprüche 1 bis 10, **dadurch gekennzeichnet, dass** die Speicherkapazität mehr als 10 MJ, vorzugsweise mehr als 100 MJ beträgt.

12. Verfahren zur Speicherung von Energie, insbesondere mit einer Energiespeicheranlage nach einem der Ansprüche 1 bis 11,
wobei zur Umwandlung überschüssiger elektrischer Energie in potentielle Energie Auftriebskörper (1) gegen ihre Auftriebskraft mit einer Hubeinrichtung (2) abgesenkt werden,
wobei durch das Aufschwimmen der Auftriebskörper (1) elektrische Energie zurückgewonnen wird,
wobei während der Rückgewinnung elektrischer Energie aufgeschwommene Auftriebskörper (1) von der Hubeinrichtung (2) abgekoppelt und für eine erneute Ankopplung an die Hubeinrichtung (2) und eine erneute Absenkung zur Umwandlung überschüssiger elektrischer Energie in potentielle Energie bereitgehalten werden.

13. Verfahren nach Anspruch 12, wobei die Auftriebskörper (1) bei einem Absenken bei Erreichen eines unteren Endes der Hubeinrichtung (2) ausgekoppelt und dort gegen ihre Auftriebskraft festgehalten werden.

14. Verfahren nach Anspruch 13, wobei die Absenk- und Auftriebsgeschwindigkeit unterhalb einer vorgegebenen Maximalgeschwindigkeit gehalten werden und wobei die Leistung bei der Umwandlung elektrischer Energie in potentielle Energie und bei der Rückgewinnung elektrischer Energie durch die Anzahl der an die Hubeinrichtung (2) angekoppelten Auftriebskörper (1) verändert wird.

## Claims

1. An energy storage plant for use in a body of water with a plurality of buoyancy bodies (1) and with a lifting device (2) for lowering and lifting the buoyancy bodies (1), **characterised in that** the buoyancy bodies (1) can be coupled and decoupled to/from the lifting device (2), wherein at least one reservoir (12a, 12b) is provided for receiving decoupled buoyancy bodies.

2. The energy storage plant according to claim 1, **characterised in that** an upper reservoir (12b) is arranged at an upper end of the lifting device (2) and a lower reservoir (12a) is arranged on a lower end of the lifting device (2) for receiving decoupled buoyancy bodies (1).

3. The energy storage plant according to claim 1 or 2, **characterised in that** the lifting device (2) comprises a circulating pulling means (3) in the form of a rope, a chain or a belt.

4. The energy storage plant according to one of claims 1 to 3, **characterised in that** the pulling means (3) comprises a density between 900 kg/m³ and 1,100 kg/m³.

5. The energy storage plant according to one of claims 1 to 4, **characterised in that** the lifting device (2) comprises an electrical machine (7) to be operated optionally as a motor or as a generator.

6. The energy storage plant according to claim 5, **characterised in that** the electrical machine (7) is arranged at a lower end of the lifting device (2).

7. The energy storage plant according to one of claims 1 to 6, **characterised by** a control device for controlling the coupling-on of the buoyancy bodies (1).

8. The energy storage plant according to one of claims 1 to 7, **characterised in that** the difference in height bridged by the lifting device (2) is between 20 m and 2000 m, preferably between 100 m and 1500 m.

9. The energy storage plant according to one of claims 1 to 8, **characterised in that** the buoyancy bodies (1) have a density of less than 400 kg/m³.

10. The energy storage plant according to one of claims 1 to 9, **characterised by** a floor-side attachment device.

11. The energy storage plant according to one of claims 1 to 10, **characterised in that** the storage capacity is more than 10 MJ, preferably more than 100 MJ.

12. A method for storing energy, in particular with an energy storage plant according to one of claims 1 to 11,
wherein for converting surplus electrical energy into potential energy, buoyancy bodies (1) are lowered against their buoyancy force using a lifting device (2),
wherein electrical energy is retrieved by lifting the buoyancy bodies (1),
wherein during retrieval of electrical energy, lifted buoyancy bodies (1) are decoupled from the lifting device (2) and held in readiness for renewed coupling to the lifting device (2) and renewed lowering for the conversion of surplus electrical energy into potential energy.

13. The method according to claim 12, wherein during lowering the buoyancy bodies (1), as they reach the lower end of the lifting device (2), are decoupled and retained there against their buoyancy force.

14. The method according to claim 13, wherein the lowering velocity and the buoyancy velocity are both kept below a pre-set maximum velocity, and wherein the capacity, during the conversion of electrical energy into potential energy and during the retrieval of electrical energy is changed by the number of buoyancy bodies (1) coupled to the lifting device (2).

## Revendications

1. Installation de stockage d'énergie pour l'utilisation dans de l'eau avec une pluralité de flotteurs (1) et avec un dispositif de levage (2) pour abaisser et relever les flotteurs (1), **caractérisée en ce que** les flotteurs (1) peuvent être accouplés au dispositif de levage (2) et désaccouplés de celui-ci, dans laquelle au moins un réservoir (12a, 12b) est prévu pour réceptionner des flotteurs désaccouplés.

2. Installation de stockage d'énergie selon la revendication 1, **caractérisée en ce que**, à une extrémité supérieure du dispositif de levage (2), un réservoir supérieur (12b) est disposé et à une extrémité inférieure du dispositif de levage (2), un réservoir inférieur (12a) est disposé pour la réception de flotteurs désaccouplés (1).

3. Installation de stockage d'énergie selon la revendication 1 ou 2, **caractérisée en ce que** le dispositif de levage (2) présente un moyen de traction circonférentiel (3) sous la forme d'une corde, d'une chaîne ou d'une bande.

4. Installation de stockage d'énergie selon l'une des revendications 1 à 3, **caractérisée en ce que** le moyen de traction (3) présente une densité comprise entre 900 kg/m³ et 1 100 kg/m³.

5. Installation de stockage d'énergie selon l'une des revendications 1 à 4, **caractérisée en ce que** le dispositif de levage (2) présente une machine électrique (7) qui est à faire fonctionner, au choix, en tant que moteur ou en tant que générateur.

6. Installation de stockage d'énergie selon la revendication 5, **caractérisée en ce que** la machine électrique (7) est disposée à une extrémité inférieure du dispositif de levage (2).

7. Installation de stockage d'énergie selon l'une des revendications 1 à 6, **caractérisée par** un dispositif de commande pour la commande de l'accouplement des flotteurs (1).

8. Installation de stockage d'énergie selon l'une des revendications 1 à 7, **caractérisée en ce que** la différence de hauteur enjambée par le dispositif de levage (2) est comprise entre 20 m et 2000 m, de préférence entre 100 m et 1500 m.

9. Installation de stockage d'énergie selon l'une des revendications 1 à 8, **caractérisée en ce que** les flotteurs (1) présentent une densité de moins de 400 kg/m³.

10. Installation de stockage d'énergie selon l'une des revendications 1 à 9, **caractérisée par** un dispositif de fixation côté sol.

11. Installation de stockage d'énergie selon l'une des revendications 1 à 10, **caractérisée en ce que** la capacité de stockage est de plus de 10 MJ, de préférence de plus de 100 MJ.

12. Procédé pour le stockage d'énergie, en particulier avec une installation de stockage d'énergie selon l'une des revendications 1 à 11,
dans lequel, pour la conversion d'énergie électrique excédentaire en énergie potentielle, des flotteurs (1) sont abaissés à l'encontre de leur force ascensionnelle avec un dispositif de levage (2),
dans lequel, grâce au flottement des flotteurs (1), de l'énergie électrique est récupérée,
dans lequel, pendant la récupération de l'énergie électrique, des flotteurs (1) qui flottent sont désaccouplés du dispositif de levage (2) et sont gardés à disposition pour un nouveau accouplement au dispositif de levage (2) et un nouvel abaissement pour la conversion d'énergie électrique excédentaire en énergie potentielle.

13. Procédé selon la revendication 12, dans lequel, lors d'un abaissement, à l'atteinte d'une extrémité inférieure du dispositif de levage (2), les flotteurs (1) sont désaccouplés et y sont maintenus à l'encontre de leur force ascensionnelle.

14. Procédé selon la revendication 13, dans lequel la vitesse d'abaissement et de relèvement sont gardées en-deçà d'une vitesse maximale prescrite et dans lequel, lors de la conversion d'énergie électrique en énergie potentielle et lors de la récupération d'énergie électrique grâce au nombre de flotteurs (1) accouplés au dispositif de levage (2), la puissance est modifiée.
